# EUROPEAN PATENT SPECIFICATION

(11) **EP 1 454 493 B1**
(45) Date of publication and mention of the grant of the patent: **23.09.2009**
(21) Application number: 02793627.7
(22) Date of filing: 10.12.2002
(51) Int. Cl.: H04N 7/24

(54) **METHOD OF RIGHTS MANAGEMENT FOR STREAMING MEDIA**
METHODE DES RECHTMANAGEMENTS FÜR STRÖMENDE MEDIA
PROCEDE DE GESTION DES DROITS DESTINE A UN SUPPORT TRANSMIS EN CONTINU

(30) Priority: 11.12.2001 US 338686 P
(43) Date of publication of application: 08.09.2004
(73) Proprietor: TELEFONAKTIEBOLAGET LM ERICSSON (publ), 164 83 Stockholm (SE)
(72) Inventor: SELANDER, Göran, S-117 37 Stockholm (SE); LINDHOLM, Fredrik, S-125 74 Älvsjö (SE); BLOM, Rolf, S-175 68 Järfälla (SE)
(74) Representative: Norin, Klas
(86) International application number: PCT/SE2002/002292
(87) International publication number: WO 2003/055219

(56) References cited:
- WO-A-00/48375
- WO-A-99/48296
- US-A1- 2002 146 237
- FRANK HARTUNG; FRIEDHELM RAMME: "Digital Rights Management and Watermarking of Multimedia Content for M-Commerce Applications" vol. 38, no. 11, 1 November 2000 (2000-11-01), pages 78-84, XP011091380

## Description

### TECHNICAL FIELD

The present invention generally relates to rights management (Digital Rights Management) for managing digital content provided over networks, and more particular to methods, equipment and systems used for managing rights for streaming media.

### BACKGROUND

The distribution of digital content or media data using modern digital communication technologies is constantly growing, increasingly replacing the more traditional distribution methods. In particular, there is an increasing trend of downloading or streaming digital content over a network from a content provider to a client or user, which then typically renders the content using a rendering device according to some user rights, or usage rules specified in a license associated with the digital content. Due to the advantages of this form of content distribution, including being inexpensive, fast and easy to perform, applications can now be found for distribution of all types of content such as audio, video, images, electronic books and software, in particular mobile telephony specific content such as ring signals and background images for the screen of the mobile telephone.

However, with this new way of distributing digital media content comes the need for protecting the content provider's digital assets against unauthorized usage and illegal copying. Copyright holders and creators of digital content naturally have a strong economic interest of protecting their rights, and this has lead to an increasing demand for rights management (DRM). DRM is generally a technology for protecting the content provider's assets in a digital content distribution system, including protecting, monitoring and restricting the usage of the digital content as well as handling payment. A DRM system thus normally includes components for encryption, authentication, key management, usage rule management and charging.

The most basic threats to a DRM system include eavesdropping, illegal copying, modification of usage rules, and removing DRM protection and re-distributing unprotected content for large scale unauthorized usage. Most of these basic security problems are solved by standard cryptographic techniques, including encryption, authentication, integrity protection and key management. However, what basically distinguishes the security problems of a DRM system from other general security problems is that not even the other end-part of the communication (the user) is completely trusted. In fact, the end-user might want to try to fraudulently extend his usage rights, for example rendering the media content more times than he has paid for or illegally copying the digital content to another rendering device. Therefore, some form of rule-enforcement is required in the client's rendering device. To this end, a DRM agent or module implemented as software and/or tamper-resistant circuit in the rendering device and some formal language expressing the usage rules are commonly used together with the basic cryptographic techniques mentioned above. For a general background in cryptography, we refer to [HAC].

While all the media types mentioned above could be downloaded to a user's device using reliable transport protocols, for real time applications and for other reasons it is sometimes desirable to digitally stream media, such as music or video, to the client. To stream media means to transfer data in a continuous flow to a client in an efficient way that allows for usage of the data before the entire media data has been received. Examples where streaming is more feasible than download include live sports events or music concerts or other media with long duration where it is not feasible, e.g. due to real time or storage requirements, to download the entire or parts of the media before rendering. Streaming is usually carried using unreliable transport mechanisms which might result in errors or losses of data portions. (We do not consider "progressive download" to be streaming, more of this below.) The rationale for using an unreliable transport mechanism is that the real time requirements are so high that there may be no time for resending lost media data, and the risk for quality loss is sometimes acceptable and/or managed by error correction codes or other technical measures. Due to the differences mentioned here, intrinsic and due to differences in transportation, download and streaming of media require different measures for protection of content and in turn require special treatment when managing the rights. The difference is accentuated in a wireless network, such as a mobile telephony network, where disturbances and data loss is more frequent than in a wired network.

The present invention includes in particular a solution which is common to DRM for download content and DRM for streaming media. This solution can be implemented with virtually no impact in an existing system for download DRM protecting content and managing rights.

### STATE OF THE ART

The following is a description of the present techniques of rights management for "content" to be used by a client. Content is generally referred to digital data objects and can be downloaded using a reliable transport protocol (such as TCP, more of which later). Examples of downloadable digital content include audio, video, images, electronic books and software, in particular mobile telephony specific content such as ring signals and background images for the screen of the mobile telephone. To the content is associated a license specifying the client's usage rules and rights pertaining to the obtained digital media.

DRM is about managing the digital content itself and deals with issues such as, who gets it, how is it delivered, how may it be used (rendered, saved, forwarded, copied, executed and/or modified), how many times may it be used, how long does the rights last, who gets paid, how much they get paid and how. Some or all of these issues may be specified in the license, which may be delivered together or separate with the digital content. In order to describe the usage rules, special languages called rights expression languages have been developed. Two of the most prevalent rights expression languages used today are extensible Rights Markup Language (XrML), and Open Digital Rights Language (ODRL).

The most difficult part of DRM is to enforce the usage rules included in the license and prescribed for the digital content. As indicated in the background, cryptographic techniques in combination with tamper resistant equipment are common components in existing DRM solution schemes. Also, obfuscation techniques such as relying on secret algorithms and protocols are used in this context, mainly in proprietary solutions since both security evaluation and interoperability between different solutions are hampered by this means.

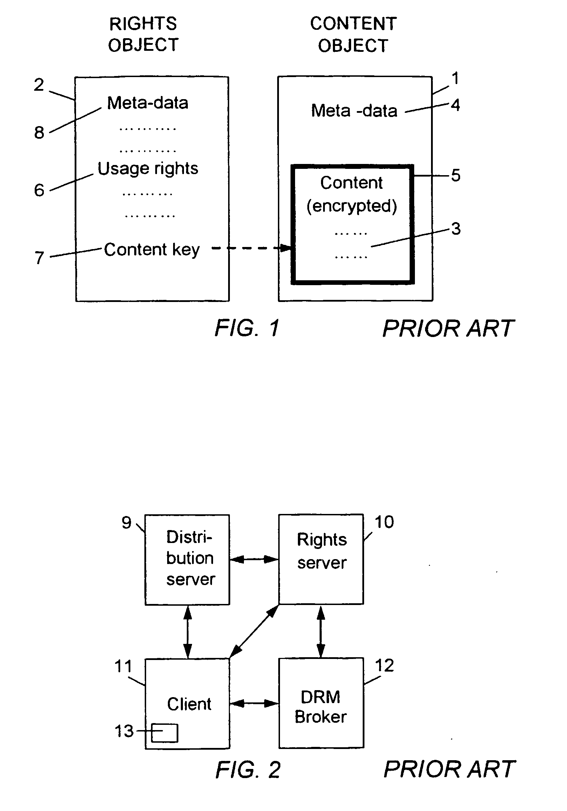

The most common data structure for download DRM is based on a separation of the content and the rights to use the content, while maintaining an association between the content and the usage rights. Both content and rights is needed to use the content. One example of DRM download will first be described with reference to Fig. 1 and later some variations, mainly with regards to the protection of content and rights, are given.

In the example of Fig. 1 the part containing downloadable content is referred to as a "content object" or "content container" 1. The part containing usage rights will be denoted "rights object" 2. Other synonyms of a rights object are "ticket" or "license". The content object contains the actual digital content 3 and meta-data 4. The content is most often stored in protected form, e.g. encrypted and integrity protected as symbolized by the heavy rectangle 5. The rights object contains usage rights 6, typically expressed in a rights expression language, a content cryptographic key 7, and meta-data 8. With use of the content key the protected digital content can be checked for authenticity and the clear text digital content extracted. The meta data in the content object may contain an identity of the content object, information on the actual content, name and location of the rights holder, information relevant for the rendering of the content such as relevant application or content type, reference to a location where an associated rights object could be accessed/purchased e.g. a Uniform Resource Locator (URL) to a web server hosted by the content provider/distributor. The meta-data of the rights object typically contains a reference to which content object it applies to, such as the content object identity or a (keyed) hash of the encrypted content. Usually, a given rights object is associated uniquely to a particular content object. Sometimes a given content object may have several associated rights objects; one reason for this is to enable different usage of the same content without necessarily changing the content object. One and the same content may be encrypted with different encryption keys and stored in different content objects for security reasons, so that disclosure of a particular secret content key does not reveal the clear text content to all owners of a content object with that particular content, but only to those that have the particular content objects that are encrypted with this key.

A variation on the example above is that the entire content object is integrity protected, not just the content. Another variation is to encrypt the content key in the rights object with an encryption key, and that the so encrypted content key is stored in the rights object instead of the clear text content key. Yet another variation/complement is that the rights object also includes, in addition to what is mentioned above, an "authentication tag". This tag is included for integrity protection of the usage rights and/or the content key, which can be clear text or encrypted, and/or the meta data. At least the rights are important to integrity protect, since otherwise a fraudulent user could change the granted rights to his favour without consulting the rights owner or paying extra. The security management of the rights object or, if applicable, of the cryptographic key necessary to access the content key, verify the integrity of the rights etc. is extremely important for the security of the DRM scheme but is not discussed further in this text.

With reference to Figs. 2-4 an example of content download and how a DRM mechanism operates will be described in connection with a user that purchases rights to use some digital content. The example also demonstrates how the DRM mechanism works to enforce that these rights are maintained to ensure that the content cannot be used to others or by other means than what is granted in the rights object. An example of two or more users sharing a media experience is also given.

In the example shown in Fig. 2 a system for DRM of downloadable content comprises a distribution server 9, rights server 10, a client 11 and a DRM broker 12. The distribution server stores and forwards content objects and rights objects. The rights objects are purchased by a user and forwarded to the client. The rights server stores rights objects corresponding to content objects for use when purchasing rights to a previously obtained content object. The client is a device on which the content is rendered. In the client there is a DRM agent 13 to enforce the usage rules. The DRM broker is a network entity that interconnects different right servers, possibly in different networks (not displayed), and offer a single point of contact for a client.

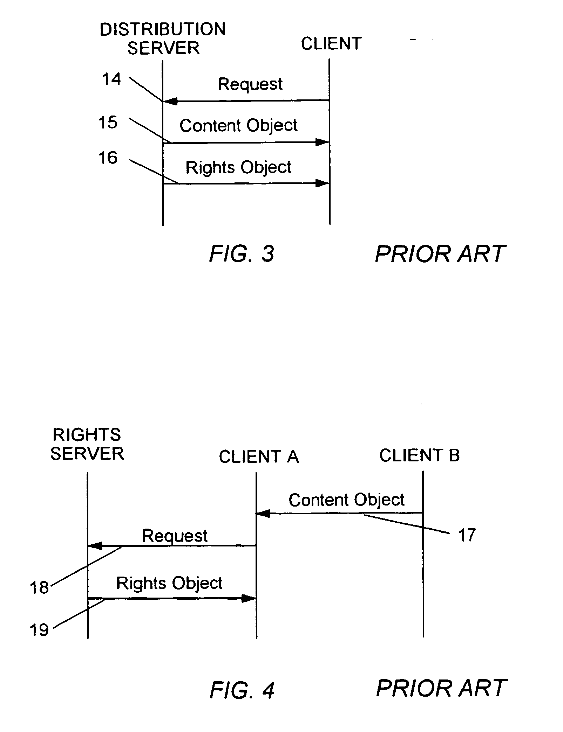

Refer to Fig. 3. A user operating the client browses a web page on the distribution server for content that can be downloaded to the client. The user decides for a particular content with certain rights associated and provides information necessary for making the payment. The user sends a request 14 for the desired content to the distribution server. A content object and a rights object with the appropriate cryptographic protection for this particular client and/or user are delivered to the client, arrows 15 and 16, preferably using a reliable transport mechanism. Within the DRM agent in the client, the necessary cryptographic information is gathered to use the content in the content object in accordance with the usage rights in the rights object. In a practical implementation, trusted applications are necessary to securely render content. The DRM agent parses the rights in the rights object, decrypts content (or request decryption of content from another trusted part, such as a local crypto module in the client) and forwards to the appropriate trusted application to render or use the content according to the specified rights. The application depends on the content type, e.g. the rendering of music or video is forwarded to a media player application, displaying of images to a picture viewer application etc.

A desired alternative procedure is that the user is allowed to download the content object to the client without or with a special rights object and is by this means able to use a limited version of the full content. This could e.g. be a small portion of a multimedia content such as a 10 second audio clip excerpt of a piece of music, a low resolution version of an image etc. The concept of allowing limited usage for free or to reduced cost is known as "preview", though it may have nothing to do with viewing or displaying the content. The complete rights to the content should not be possible to reveal by this mechanism, e.g. because the content in the content object is cryptographically protected and the content key necessary for using the entire content is located in the (ordinary price) rights object. After preview, the user can decide if the content is desirable to purchase and then contact the rights server, the URL of which may be available from the content object or via the DRM broker, and subsequently purchase and download a rights object needed in the DRM agent to be able to use the entire content.

The separation of content and usage rights utilized in preview is also applied in another desirable content distribution example outlined below: Super-distribution. Refer to Fig. 4. Consider the case that a user wants to share the usage experience with another user. Since the content object is protected in itself and requires no particular security during transport, there is no security risk in sending the content object directly between the two clients, e.g. over a local connection such as Bluetooth, IrDA, cable or by any network.

User B has experienced a interesting content and orders client B to forward the content object to client A which is indicated at arrow 17. The received content object may contain a preview to make it easier for the receiving user to decide if this is interesting. The content object contains a reference to the relevant rights server or DRM broker, which can direct the user to the correct rights server. Client A connects to rights server, negotiates rights, accepts payment, and requests a rights object as is indicated by arrow 18. The requested rights object is downloaded to client A, arrow 19, and now the previously obtained content object can be used on client A. This concept of peer-to-peer distribution of content is called "super-distribution" and is considered a very important mechanism for the content based business.

Potentially, desirable and price-worthy content can spread rapidly in the population of users and create large revenue to the content providers/distributors.

Next the delivery mechanisms for download and streaming are described. These mechanisms are important to understand when considering the complications arising from managing rights to media transported with respective mechanism.

In the case of download DRM in an IP network, the content object and the rights object are transported to the client using a reliable transport protocol such as the Hyper Text Transport Protocol (HTTP) or the File Transfer Protocol (FTP). These are standard web protocols used by most web servers and web browsers. HTTP and FTP both operate on top of the Transmission Control Protocol (TCP), which handles all the data transfers. Optimized for non-real-time applications such as file transfer and remote log-in, TCP's goal is to maximize the data transfer rate while ensuring overall stability and high throughput of the entire network. To achieve this, using an algorithm called slow start, TCP first sends data at a low data rate, and then gradually increases the rate until the destination reports packet loss. TCP then assumes it has hit the bandwidth limit or network congestion, and returns to sending data at a low data rate, then gradually increases repeating the process. TCP achieves reliable data transfer by re-transmitting lost packets. However, it cannot ensure that all resent packets will arrive at the client in a certain time e.g. to be able to be played in a media stream.

Now turning to the streaming technology. HTTP and FTP (or other protocols based on TCP) is suited for reliable transfer of data but performs less well for streaming media, the main reasons being that TCP enforces reliable transport without regard to any timing requirements and that TCP changes the data transfer rate of the client server connection according to the availability of the bandwidth, not according to the need of the media. The most common standardized example for transport of real-time data is the Real-time Transport Protocol [RTP], which is a packet format for multimedia data streams in an IP network. Most proprietary protocols for transporting real-time data are similar to RTP. In particular, RTP is a protocol framework to accommodate for additional functions. To completely specify the protocol requires additional information such as payload format (e.g. media encodings). Such information constitutes a so called "profile" for RTP. In streaming applications RTP preferably runs on top of the User Datagram Protocol (UDP) which improves the streaming experience compared to TCP. Unlike TCP, UDP is a fast, lightweight protocol without any retransmission or data rate management functionality which makes it ideal for transmitting e.g. real-time audio and video data, which can tolerate lost packets. Because of the above mentioned slow start mechanism implicit in the TCP protocol, UDP traffic effectively gets higher share of the bandwidth than the TCP traffic in a network.

For the sake of completeness the concept of "progressive download" should be mentioned. Progressive download means that the media is reliably downloaded, usually using TCP, but rendering is started before the downloading is complete. Since TCP is used also in this case, the same limitations apply for real-time media streams as was mentioned for download above.

To control the presentation of a transported multimedia stream, a control protocol is used such as the Real-Time Streaming Protocol [RTSP]. RTSP may be used for setting up a media streaming session, furthermore starting, pausing, stopping and moving ("fast forward" and "rewind") in the media stream. It can thus be thought of as a remote control between a client and a server or servers from which multimedia is being streamed.

In order to synchronize the streaming server and the client, the media client (which is a software part of the client) is required to have initialization parameters in order to correctly interpret the RTP data. These initialization parameters may be described with the Session Description Protocol [SDP], which is a description protocol for multimedia sessions, including among other things: session name, time during which the session is active, media comprising the session, information to receive those media (addresses, ports, formats etc.), bandwidth used, type of media, codecs (algorithms for compression and decompression), media keys and also additional attributes pertaining to a specific media in a multimedia stream or to an entire session.

Below is an example of an SDP description.
v=0
o=mobilemusic 288973739593 2887475859 IN IP4 126.16.64.4
s=Thesong
e=mobilemusic@themusiccompany.com
m=audio 0 RTP/AVP 0
a=control:rtsp://224.2.17.12/media/thesong.amr

The parameters have the following meaning:
'v' - version of the protocol
'o' - owner/creator and an identifier
's' - session name
'e' - e-mail address.

The 'm=' field is used to enumerate streams and contains information on payload type, RTP profile and recommended ports. RTP/AVP indicates that payload is RTP over UDP. The 'a=' field indicates attributes, `a=control:' specifies the URL to the multimedia stream, in this case an audio stream. Based on the information in this SDP description, the media client sends an RTSP SETUP command in order to establish the transport settings (IP address, port number, , and other parameters) and, after acknowledgement, an RTSP PLAY command to initiate the media stream is sent by the streaming server. Further details can be found in [RTSP] and [SDP].

A special case of the previous example is to just use the RTSP link URL: rtsp://224.2.17.12/media/thehit.amr to initiate the media stream.

Such a URL uniquely defines a streaming media and by using this data in a RTSP DESCRIBE message, a streaming session is initiated that will result in the same stream as in the previous example. However, transport and protocol information must be negotiated between server and client before the RTSP SETUP and PLAY commands can be issued by the client. It will thus result in an additional round trip of messages between the client and server before the rendering can start (the DESCRIBE message and the reply). As a result, initiating a streaming session with only an RTSP URL, will cause an extra delay is therefore not as efficient as the first case.

Another alternative to describe a streaming session is to use the Synchronization Multimedia Integration Language (SMIL) which is a media description language to describe a multimedia session. SMIL. can be thought of as the Hyper Text Markup Language (HTML) specifying content and geometry of a web page, but adding to this a time based structure for multimedia presentations, and thus enabling different streams to be specified and also different times to setting up the various streams (or render other media objects). Using SMIL also requires additional round trips of messages and is therefore less efficient. However, SMIL enables other types of multimedia sessions to be rendered than can be described by a single SDP description, for example time discrete objects like images.

Turning now to the protection of streaming media, encryption of data is usually required to maintain confidentiality of the media through a network. Encrypted data could in principle be transported with any protocol, but when the protocol is unreliable a loss of a packet may result in an impossibility to decrypt the data or a serious loss of quality, possibly much greater loss of quality than a corresponding loss of packet of unencrypted data. Depending on the encryption algorithm a lost packet may result in an error during decryption; which error may spread to other received packets making it impossible to decrypt these. This is in contrast to delivery of encrypted data when using a reliable protocol, where the entire data is guaranteed to be delivered. Therefore, special streaming encryption protocols are designed for wireless networks, an example being the Secure Real-Time Transport Protocol [SRTP], which is a profile of RTP. SRTP provides confidentiality, message authentication, and replay protection to RTP/RTCP traffic. It is designed to avoid error propagation due to errors in encrypted data, to be tolerant to loss or re-ordering of RTP packets and it allows fast-forward and rewind in an encrypted stream. SRTP transported over UDP is thus a secure, but unreliable, protocol.

An example of an SDP description to an SRTP encrypted streaming audio/video session:
i=The lord of the rings behind the scene
e=mobile films@themusiccompany.com
a=recvonly
m=audio 0 RTP/SAVP 0
a=control:rtsp://224.2.17.12/media/lothringen.amr
k=base64: iO64Ygf+IJtfF18wSGbDaR==
m=video 0 RTP/SAVP 0
a=control:rtsp://224.2.17.12/media/lothringen.rtp
k=base64: Ah2pB Y/Hoq S+Og 1bdG6TMg==

The major difference from the previous example is the SRTP profile, which is indicated by RTP/SAVP in the "m=" fields. Also the individual encryption keys for the audio and the video streams are included in base 64 encoding in the "k=" fields.

The international application W09948296 discloses a method and apparatus for protection of streamed media content. The apparatus includes control means for governance of content streams or objects, decryption means for decryption content streams or objects under control of the control means.

Other related art in the technical field is disclosed in HARTUNG F.et al. "Digital Rights Management and Watermarking of Multimedia Content for M-Commerce Applications" IEEE communications magazine, November 2000, pages 78-84 IEEE SERVICE CENTER, PISCATAWAY, US. This article discusses DRM to protect rights and business in the domain of digital media distribution.

### Problem

The above described download technology is not immediately feasible for use with streaming technology. The separation of content and ticket is applicable to streaming.

The problem to be solved is thus: How to modify the download technology and its secure rights management to allow for (a) transmission of streaming multimedia and (b) secure rights management of the transmitted streamed multimedia taking the following facts in consideration:
- Streaming is a procedure that implies real time rendering of the media as it is received, streaming doesn't allow storage of the received media followed by rendering the media as with download.
- Existing network elements and mechanisms in use for download should, to the greatest extent possible, be reused also for streaming, thus allowing them to be used simultaneously for download and streaming.
- Streaming media uses an unreliable transport protocol, such as user datagram protocol (UDP). A small amount of bit-errors or lost packets can be handled without major impact on the media quality and may be acceptable to the user if this can be controlled or at least verifiable so the user does not have to pay for too noisy media.
- However, as described the previously, in DRM systems some data cannot be transported unreliably, e.g. the usage rules and cryptographic media keys, to which no changes are acceptable, since that could violate the prescribed rules or make it impossible to decrypt the content.
- To cryptographically protect the streaming media a cryptographic key must be securely agreed between the streaming server and client.
- If a secure streaming transport protocol is being used, the cryptographic key must be available before the streaming starts, but download DRM protocols are usually ignorant to the order of arrival of rights object and content object.
- It is desirable to be able to "rewind" and "fast-forward" the streaming media.
- In some applications, e.g. real-time applications, it is not possible to access the entire content at the same time (e.g. a web-cast). This should not affect the handling of the media.

In prior art DRM systems there are no common solutions to both DRM for download media and DRM for streaming media. Indeed, cryptographic protection of streaming media transported over channels with disturbances even without managing rights is hardly addressed (one exception being [SRTP]). In particular, given an existing system that provides DRM for download of content, there exists no solution to transparently incorporate DRM for streaming into this system. There are also other important constraints that should work transparently for both download and streaming, including mechanisms for super-distribution, preview of content and purchase of rights.

The present invention presents a solution to the above mention problem.

### SUMMARY OF INVENTION

One object of the present invention is to provide a solution to handle DRM with streaming media.

Another object of the present invention to provide handling of DRM with streaming media by using existing protocols and protection mechanisms for DRM of media download.

Still another object of the invention is to provide handling of DRM with streaming media that allows for super-distribution of the streaming media.

Yet another object of the invention to provide an arrangement and a method for managing rights to streaming media.

A further object of the invention is to provide a system and a method of delivering and managing rights to streaming media.

These and other objects are achieved with the invention defined in the accompanying claims.

A distinguishing feature of the present invention is to use the DRM mechanism that comprises a content object and an associated rights object, wherein the content object comprises, not the content, but an initiation description of a forthcoming streaming session during which the digital media is transferred to a client by streaming. This feature will allow for preview and super-distribution. Optionally the session initiation description comprises a cryptographic key for protection of the streaming media from unauthorized usage.

In the following the expression of "content" will occasionally denote whatever data located in the place where content is located in the content object in the prior art download DRM solution.

In the following the present invention is presented. To simplify the understanding, an existing given rights management system for download is assumed, using content objects and rights objects as described in the state of the art DRM solution for download. Rights to streaming media are managed by the following arrangement:
- Instead of the actual digital content in the content object, an initiation description of a streaming media is placed in the same location in the record. The initiation description may e.g. contain an SDP description, in particular a RTSP URL pointing to a particular streaming media, a SMIL file etc.
- The initiation description may optionally contain cryptographic information pertaining to protection of the streaming media from unauthorized usage.

Apart from this, the DRM solution for download is reused without changes. Thus e.g. the rights object contains usage rules and a cryptographic key encrypting the "content". Just as in the download case, the DRM agent parses the usage rules, decrypts the "content" and passes the clear text "content" on to the appropriate trusted application that will do the rendering. In the case of streaming media, the "content" is a streaming media initiation description.

Depending on trust model between the actors in a particular content distribution scenario, it may be sufficient with protecting the streaming initiation description as enabled by the download DRM system, and no protection of the actual streaming media. Below are some examples of conditions that may, if complied with, either one or jointly, be considered substantial enough to neglect protection of the actual streaming media.
- If the streaming initiation description does not leak to unauthorized parties so as to only allow streaming to authorized parties.
- If it is sufficiently difficult to eavesdrop on the streaming media to deter or limit unauthorized usage.
- If it is sufficiently difficult to store the streaming media to deter or limit unauthorized usage.

However, in the general case, in particular if only some or none of the conditions above a complied with, protection of a streaming media initiation description will not be sufficient and additional protection of the streaming media is necessary. Cryptographic protection of the streaming media can be applied at any level in the Open Systems Interconnect (OSI) model. In the following one example of this will be described, where protection is applied on the transport level.

A definite improvement of the security of streaming media is to cryptographically protect the media during transport between a streaming server managed by the content provider/distributor and trusted streaming application in the client. This may be achieved using a secure and (in particular for wireless networks) robust streaming transport protocol such as SRTP, as previously described. In this case it is of course vital that the cryptographic key or keys used to protect the streaming media between streaming server and client are kept confidential with the trusted parties. This can be (or be managed by) the cryptographic information that the invention optionally specifies to be included in the streaming media initiation description. E.g. an SDP description has optional attributes for specification of media keys, as indicated in one of the previous examples. In particular such an initiation description contains only one or several RTSP URL(s) and an encryption key attribute(s) containing encryption key(s). Alternatively cryptographic keys can be conveyed in a streaming media initiation description together with any initiation description of a clear text streaming session, e.g. an SDP description without key attributes bundled with a cryptographic key, in particular one or several RTSP URL(s) and separate encryption key(s). An alternative embodiment of streaming media initiation description is a SMIL file bundled with cryptographic key(s).

Additional security mechanisms can also be considered to protect the streaming media initiation description or streaming media itself.

### Advantages achieved with the invention

The present invention is generally applicable to rights management (DRM) of streaming media. The invention provides a common solution for DRM for media download and DRM for streaming media. With the present invention, very few changes are needed in an existing DRM for download system to enable a compatible system that handles streaming media. Because of this and the particular way that these changes seamlessly fit into the concepts of DRM for download, all features of the DRM download systems such as rights management, super-distribution, preview, purchase of rights objects to a particular content etc. carry over to streaming media. E.g. super-distribution generally works by forwarding of content object from peer to peer. The receiving peer can with a purchased rights object initiate a streaming session of his/her own.

A word of explanation may be necessary for the concept of preview of streaming. This may be implemented in several ways. One way is to actually provide the content object with a limited multimedia sample of the full content or related content that is actually downloaded to the client. Another way is to provide a key with which the client can setup a temporally or otherwise limited/restricted stream, optionally at a lower resolution/quality than the full version.

The invention also provides as an option to enable cryptographic protection of the media stream and solves the key management problem how to establish common secret keys at the streaming server and streaming client. Since the arrangement is compatible with the use of secure and robust streaming protocols such as SRTP, the invention is perfectly adequate for managing rights in wired networks as well as wireless networks with disturbances causing errors in transmissions.

As previously explained there are a number of differences between streaming and downloading of media content. However, the user experiences of the same media, say a video of a musical concert, being rendered by either method need not differ significantly: The concert downloaded to the client has the advantage of not showing any signs of occasional disturbances whereas a video that was streamed to the client can be a live and directly broadcasted concert.

In accordance with the invention, one and the same rights management scheme may be used for both download and streaming media independently of transport of media. This rights management scheme will work for super-distribution, purchasing of rights etc. which are considered important business cases. If super-distribution only would work for download, then the introduction of streaming services would potentially lead to an uncertainty of the capabilities to distribute/purchase content that could damage the business case for super-distribution of download content.

Since the same rights management scheme is used for both download and streaming media it is not necessary to implement parallel solutions for download and streaming. That could also vouch for a unified user experience.

### BRIEF DESCRIPTION OF THE DRAWINGS

The invention together with further objects and advantages thereof, may best be understood by making reference to the following description taken together with the accompanying drawings, in which:
- Fig. 1: illustrates the data structure of a rights management (DRM) system using prior art download technology,
- Fig. 2: illustrates the nodes involved in prior art DRM,
- Fig. 3: is a diagram illustrating the prior art method steps used for access to content from a content distributor, in a DRM system using the download technology
- Fig. 4: is a diagram illustrating the prior art method steps used for access to content from another client (super-distribution), in a DRM system using the download technology,
- Fig.: 5 illustrates schematically the basic DRM mechanism for streaming media in accordance with the present invention,
- Fig. 6: is a diagram illustrating the method steps in accordance with the present invention for transmission of streaming media and DRM,
- Fig. 7: is a schematic block diagram illustrating nodes and devices for providing DRM of streaming media in accordance with the invention, and
- Figs. 8A-D: illustrate various methods of including an initiation description in a content object in accordance with the invention, and
- Figs. 9A-F: illustrate various methods of including an initiation description with a cryptographic media key in a content object in accordance with the invention.

### Description of preferred embodiments

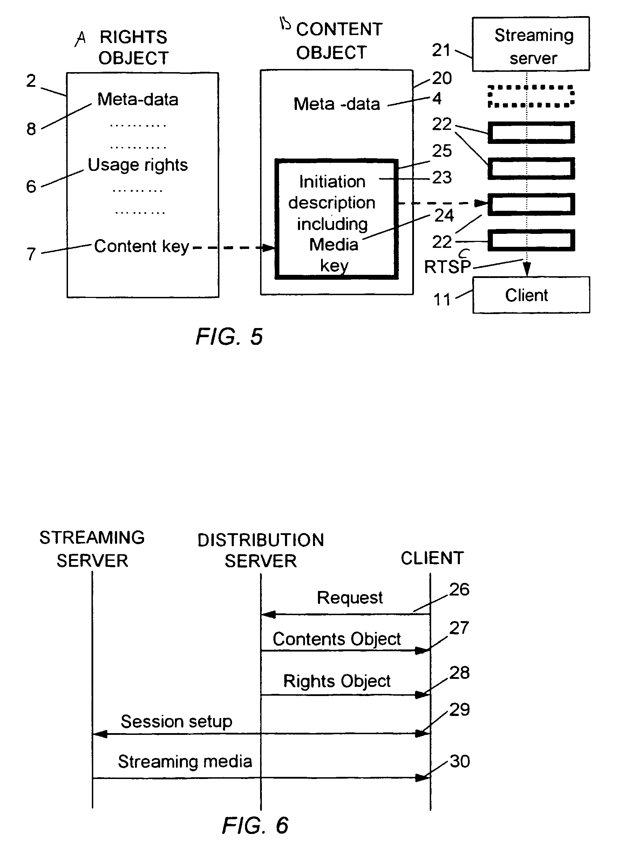

Fig. 5 illustrates the data structure and a client view of an example of DRM for streaming media in accordance with the present invention. For the moment it is assumed that the client has received a content object 20 and a rights object 2 to a particular digital multi-media which is transported from a streaming server 21 to the client in data packets 22 during a streaming session. How this is situation arises will be described further down.

The content object comprises meta-data, an initiation description 23 in the form of an SDP description of the kind described above including a media key 24. The initiation description is cryptographically protected as symbolized by the heavy rectangle 25.

The rights object associated with the content object comprises meta-data, usage rights and a content key, just as in the download DRM case.

The client uses the content key provided in the rights object to decrypt the protected initialisation description including the media key provided in the content object. The clear text media key is used by the client for decryption of the protected multi-media stream 22. The decrypted media stream is accessed by an application and is rendered on a non-shown media player.

Before the multi-media stream is delivered to the client a streaming media session must be set up. To this end a connection between the client and a streaming server is set up. Over this connection many kinds of information relating to the multi-media, such as its name, its type, where it is located, the manner in which it is coded etc., are exchanged between the streaming server and the client before the media stream is started. The initiation description is used for these purposes.

Fig. 6 illustrates method steps in accordance with the present invention for providing DRM with streaming media. The client sends a request for a multimedia to a distribution server as illustrated at arrow 26. The terms for the rights to the requested multimedia are negotiated and settled upon. Next step, illustrated by arrow 27, is that the distribution server transmits the content object with the protected initiation description to the client. Next the rights object containing the usage rights and the content key is sent to the client, as represented by arrow 28. Using said content key the client decrypts the session initiation description and using the information given therein the client initiates the set up of a streaming session with a streaming server. This is indicated by the double headed arrow 29. Over this connection further parameters to be used in the streaming session are exchanged. In the last step the streaming session is started and a protected multi-media stream of packets starts streaming to the client, illustrated by arrow 30.

The packets are transported on the streaming protocol indicated in initiation description, in this case the SRTP protocol. A reliable protocol is used for transport of the rights object and the content object, e.g. HTTP or WAP. A reliable protocol is also used for RTSP control signalling.

The client may verify receipt of the packets by sending an acknowledgement or verification to the streaming server. Such mechanisms are part of the SRTP/SRTCP protocol [SRTP].

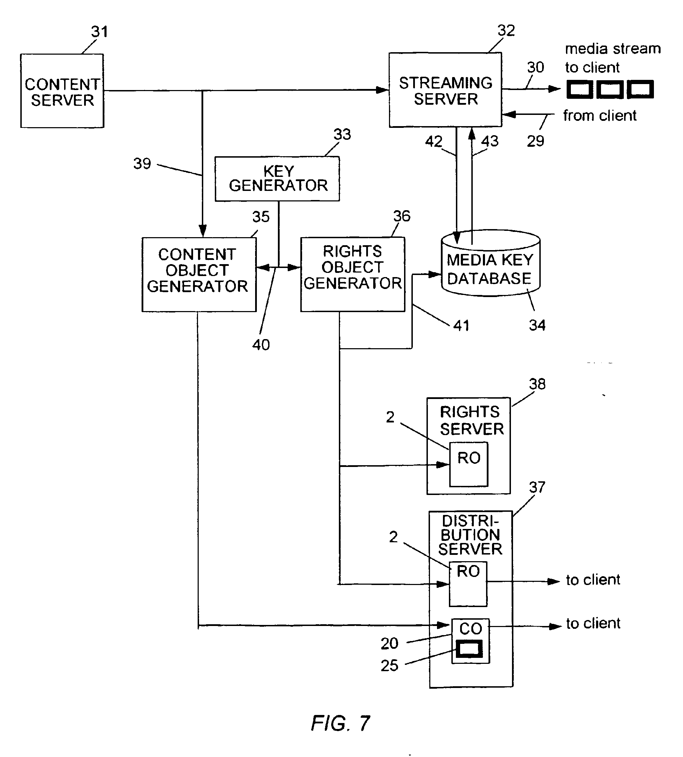

Fig. 7 is block diagram illustrating nodes and devices for providing DRM of streaming media in accordance with the invention. There is a content server 31 containing multi-media, a streaming server 32 providing a multi-media stream, an encryption key generator 33 providing content keys as well as media keys, a media key database 34 for storing media keys, a content object generator 35, a rights object generator 36, a distribution server 37 and a rights server 38.

The content object generator fetches the above mentioned initialization parameters for use in the initiation description of a streaming session from the content server 31 (illustrated by arrow 39). The media key 24 is fetched from the key generator. The initiation description is cryptographically protected using a content key also generated by the key generator. This content key is also available for rights object generator, see below. Meta-data are also fetched and are included in the content object. The generated content object is stored in the distribution server and a copy thereof is delivered to the client in accordance with arrow 27 of Fig. 6.

The rights object generator generates the rights object associated with the content object and includes therein the same content key as used for the protection of the content object. The rights object, which includes an identity, is stored in the distribution server and in the rights server. A copy thereof is delivered to the client in accordance with arrow 28 of Fig. 6.

Double headed arrow 40 illustrates delivery of the media and content keys to the content object generator and the rights object generator.

The media key inserted into the content object is also stored in the media key database together with the identity of the rights object associated with the generated content object. This is illustrated with arrow 41 in Fig. 7.

Up to now the situation is the following: The client has received the content object and the rights object as previously described (arrows 27 and 28 of Fig. 6). The media key 24 and related rights object identity are stored in the media key database.

Next, at arrow 29 in Fig. 7 (which corresponds to arrow 29 in Fig. 6), a session set up message from the client is received by the streaming server. This message contains the previously mentioned information and subsequent signalling between client and server will reveal the identity of the rights object associated with the content object. The streaming server sends a media key request, arrow 42, to the media key database and provides the rights object identity received at arrow 29. In response to this request the media key database is searched for the indicated rights object identity and returns the corresponding media key to the streaming server, as indicated by arrow 43. The streaming server will now use this media key to cryptographically protect the media stream it starts to deliver to the client, arrow 30 (corresponding to arrow 30 in Fig. 6). The streaming server and the client will now both use the same media key for encryption and decryption respectively.

Many modifications of the above described example are possible. Instead of using the same media key for encryption at the streaming server and for decryption at the client the streaming server may use a public media key while a private media key is delivered to the client in the content object.

Another modification is to cryptographically protect also the media key in the content object instead of providing it in clear text as described.

The media stream and/or the content object may also be protected by encryption and/or integrity protection. The rights object and/or the content object may also be delivered to the client unprotected.

The order in which the content and rights objects are delivered to the client may be reversed, i.e. step 28 may precede step 27 in Fig. 6. They may also be delivered to the client over separate communication channels, such as in a SMS message and using the WAP protocol respectively, in a mobile communication network.

The initiation description may be provided by the content server instead of being provided by the content object generator.

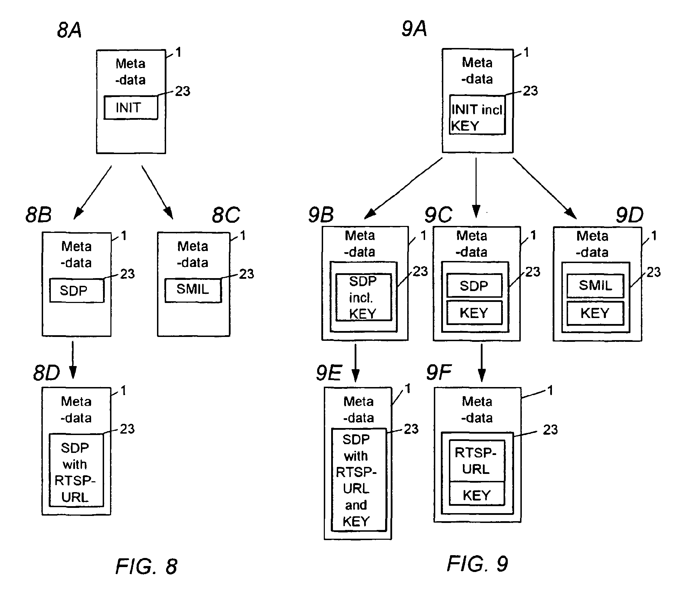

In Fig. 8 different embodiments of the content object are shown at 8A-8D. A common feature for all embodiments in Fig. 8 is that no cryptographic information is contained in the initiation description. At Fig. 8A a basic version is shown which contains the usual meta-data and the initiation description file, this time without media key. In Fig 8B the initiation description is embodied as an SDP description with no key attributes set. In Fig. 8C the initiation description is embodied as a SMIL file without key. Fig. 8D is a special case of Fig. 8B wherein the SDP description is a RTSP URL that addresses the streaming media.

In Fig. 9 further different embodiments of the content object are shown at 9A-9F. A common feature for all embodiments is that cryptographic information is contained in the initiation description. At Fig. 9A a basic version is shown which contains the usual meta-data and the initiation description file including a media key. In Fig. 9B the initiation description is embodied as an SDP description containing key attributes that are set. In Fig. 9C the initiation description is embodied as an SDP description with no key attributes set; the media key is included separately in the initiation description. In Fig. 9D the initiation description is provided as a SMIL file and a media key. Fig. 9E is a special case of Fig. 9B wherein the SDP description is an RTSP URL that addresses the streaming media and that has media key attributes set. Similarly Fig. 9F is a special case of Fig. 9C wherein the SDP description is an RTSP URL addressing the streaming media. The media key is provided separately from the RTSP URL in the initiation description.

It should be understood that the media key shown in Fig. 9 may comprise several further keys such as for examples further media keys and/or further keys for providing other types of security. One reason for using several media keys is to associate each key with a just a portion of the complete media stream so as to enhance the security. The idea behind this is that it should not be possible for an eavesdropper to decrypt the entire media stream using a single key.

The embodiments described above are merely given as examples, and it should be understood that the present invention is not limited thereto. Further modifications, changes and improvements, which retain the basic underlying principles disclosed and claimed herein are within the scope of the invention.

### References

[HAC] A.J. Menezes, P.C. van Oorschot and S.C. Vanstone, "Handbook of Applied Cryptography", CRC Press.
[RTP] V. Jacobson, S.L. Casner, R. Frederick and H. Schulzrinne, "RTP: A Transport Protocol for Real-Time Applications", RFC 1889, IETF, November 2001.
[RTSP] H. Schulzrinne, A. Rao, R. Lanphier, "Real Time Streaming Protocol (RTSP)", RFC 2326, IETF, April 1998.
[SDP] M. Handley, V. Jacobsson, "SDP: Session Description Protocol", RFC 2327, IEFT, April 1998.
[SRTP] M. Baugher, R. Blom, E. Carrara, D. McGrew, M. Näslund, K. Norrman and D. Oran "The Secure Real Time Transport Protocol", draft-ietf-avt-srtp-05.txt, IETF, June 2002.

## Claims

1. A client device (11) for rendering digital content handled according to a digital rights management, DRM, technology for download which client device (11) comprises
means for downloading a content object (20) of a first type comprising as content a download content;
means for downloading a rights object (2) comprising usage rules (6) defining the right to use an associated content object (20); and
means for rendering content in the content object (20) of the first type according to the usage rules of an associated received rights object (2);
**characterised in that**
said means for downloading the content object are further arranged to download a content object of a second type comprising as content a session initiation description (23) for a streaming session, and **in that**
said means for rendering content are further adapted to set-up a streaming session, during which streaming media is transferred by streaming, according to the information in the session initiation description (23) received in the content object (20) of the second type and according to the usage rules (6) of an associated received rights object (2).

2. A client device in accordance with claim 1 wherein the session initiation description (23) comprises a SDP description, a URL to said streaming media or a SMIL file.

3. A client device in accordance with claim 1 or 2 wherein the rights object (2) contains first cryptographic data (7) related to cryptographic protection of the session initiation description contained in the content object of the second type (20).

4. A client device in accordance with claim 3 wherein the session initiation description (23) in the content object of the second type (20) comprises second cryptographic data (24) for cryptographic protection of the streaming media (22).

5. A client device in accordance with claim 4, wherein the second cryptographic data comprises at least one cryptographic key (24).

6. A client device in accordance with claim 4, wherein the second cryptographic data comprises several cryptographic keys (24) protecting the streaming media.

7. A client device in accordance with claim 1, wherein said means for downloading the content object (20) of the first or second type and the rights object (2) is adapted to use HTTP (Hypertext Transfer Protocol) and/or WAP (Wireless Application Protocol) and/or SMS (Short Message Service).

8. A method for rendering digital content handled according to a DRM technology for download comprising the following steps
downloading a content object (20) comprising a content;
downloading a rights object (2) comprising usage rules (6) defining the rights to use the content object (20); and
rendering the downloaded content according to the usage rules (6);
wherein the method is further **characterised by**
the content object (20) being of a first type or a second type, wherein the content of the first type of content object is a download content, and the content of the second type of content object is a session initiating description for a streaming session;
and by said step of rendering the downloaded content including setting up a streaming session, during which streaming media is transferred by streaming, according to the information in the session initiating description and according to the usage rules (6) associated with the received rights object (2) if the downloaded content object is of the second type.

9. A method in accordance with claim 8, wherein the session initiation description (23) comprises a SDP description, a URL to said streaming media or a SMIL file.

10. A method in accordance with claim 8 or 9, wherein the rights object (2) contains first cryptographic data (7) related to cryptographic protection of the session initiation description contained in the content object of the second type (20).

11. A method in accordance with claim 10, wherein the first cryptographic data is cryptographically protected.

12. A method in accordance with claim 10, wherein the streaming media (22) is cryptographically protected with second cryptographic data (24) in the session initiation description (23) in the content object of the second type.

13. A method in accordance with claim 12, wherein the streaming media is protected using a security protocol.

14. A method in accordance with claim 13, wherein secure real time transport protocol (SRTP) is used as security protocol.

15. The method in accordance with claim 8, wherein the content object of the second type is provided with a portion of streaming media, and the content object of the second type is transmitted so provisioned to a user who has no rights or limited rights to the streaming media.

16. The method in accordance with claim 8, wherein the content object of the first or second type (20) and/or rights object (2) is protected by encryption and/or integrity protection.

17. A method in accordance with any of claims 10 to 11, wherein the client device upon receipt of the rights object and the content object of the second type enforces the rights to the content object and the streaming media based on the information contained in the rights object wherein
- the client device accesses the session initiation description (23) contained in the content object of the second type by using the first cryptographic data (7) and initiates transmission of streaming media by setting up (29) a connection between the client and a streaming server (32).

18. A method in accordance with claim 13, wherein the streaming server cryptographically protects the streaming media (22) using the second cryptographic data (24) wherein said step of rendering includes that the client:
- accesses the second cryptographic data (24) contained in the content object of the second type
- accesses the streaming media (22) using the accessed second cryptographic data (24),and
- renders the accessed streaming media according to the usage rules.

19. The method in accordance with claim 12, wherein the session initiation description is in the form of an SDP description and the second cryptographic data (24) is included in the SDP description.

20. The method in accordance with claim 12, wherein the session initiation description is in the form of an SDP description and the second cryptographic means (24) is provided separately from the SDP description.

21. The method in accordance with claim 12, wherein the session initiation description is in the form of a SMIL file and the second cryptographic data (24) is included in the SMIL file.

22. The method in accordance with claim 12, wherein the session initiation description is in the form of a SMIL file and the second cryptographic data (24) is provided separately from said SMIL file.

23. The method in accordance with claim 12, wherein several second cryptographic data items (24) is used for protection of the streaming media.

24. The method in accordance with claim 12, wherein the session initiation description (23) includes information on management of the second cryptographic data (24), said information allowing for cryptographic protection of the streaming media and/or verification of data integrity of the streaming media (22) with a new cryptographic key derived from said first mentioned second cryptographic data (24).

25. The method in accordance with claim 9, wherein the URL (Uniform Resource Locator) of a distribution server (9) is included in a meta data portion (8) of the content object.

26. The method in accordance with claim 12, wherein the second cryptographic data (24) is used to derive cryptographic information in order to integrity protect and/or verify reception of the streaming media.

27. The method in accordance with claim 8, wherein the content object (20) and rights object (2) are delivered to the client (11) using HTTP (Hypertext Transfer Protocol) and/or WAP (Wireless Application Protocol) and/or SMS (Short Message Service).

28. The method in accordance with claim 8, wherein the rights object (2) and/or content object (20) is downloaded to the client unprotected.

## Patentansprüche

1. Client-Vorrichtung (11) zur Wiedergabe von digitalem Inhalt, der gemäß einer digitalen Rechteverwaltungs-(DRM-)Technologie zum Herunterladen verarbeitet wird, wobei die Client-Vorrichtung (11) umfasst:
Mittel zum Herunterladen eines Inhaltsobjekts (20) eines ersten Typs, das als Inhalt einen Herunterladeinhalt umfasst;
Mittel zum Herunterladen eines Rechteobjekts (2), das Nutzungsregeln (6) umfasst, die das Recht zur Nutzung eines zugeordneten Inhaltsobjekts (20) definieren; und
Mittel zur Wiedergabe von Inhalt in dem Inhaltsobjekt (20) des ersten Typs gemäß den Nutzungsregeln eines zugeordneten empfangenen Rechteobjekts (2);
**dadurch gekennzeichnet, dass**
die Mittel zum Herunterladen des Inhaltsobjekts ferner dafür eingerichtet sind, ein Inhaltsobjekt eines zweiten Typs herunterzuladen, das als Inhalt eine Session Initiation-Beschreibung (23) für eine Datenstromübertragungssitzung umfasst, und dass
die Mittel zur Wiedergabe von Inhalt ferner dafür eingerichtet sind, eine Datenstromübertragungssitzung einzurichten, während der strömende Medien übertragen werden durch Datenstromübertragung gemäß der Information in der im Inhaltsobjekt (20) des zweiten Typs empfangenen Session Initiation-Beschreibung (23) und gemäß den Nutzungsregeln (6) eines zugeordneten empfangenen Rechteobjekts (2).

2. Client-Vorrichtung nach Anspruch 1, wobei die Session Initiation-Beschreibung (23) eine SDP-Beschreibung, eine URL zu den strömenden Medien oder eine SMIL-Datei umfasst.

3. Client-Vorrichtung nach Anspruch 1 oder 2, wobei das Rechteobjekt (2) erste kryptographische Daten (7) in Bezug auf kryptographischen Schutz der Session Initiation-Beschreibung enthält, die im Inhaltsobjekt des zweiten Typs (20) enthalten ist.

4. Client-Vorrichtung nach Anspruch 3, wobei die Session Initiation-Beschreibung (23) in dem Inhaltsobjekt des zweiten Typs (20) zweite kryptographische Daten (24) zum kryptographischen Schutz der strömenden Medien (22) umfasst.

5. Client-Vorrichtung nach Anspruch 4, wobei die zweiten kryptographischen Daten zumindest einen kryptographischen Schlüssel (24) umfassen.

6. Client-Vorrichtung nach Anspruch 4, wobei die zweiten kryptographischen Daten mehrere kryptographische Schlüssel (24) umfassen, die die strömenden Medien schützen.

7. Client-Vorrichtung nach Anspruch 1, wobei die Mittel zum Herunterladen des Inhaltsobjekts (20) des ersten oder zweiten Typs und des Rechteobjekts (2) dafür eingerichtet sind, HTTP (Hypertext-Übertragungsprotokoll) und/oder WAP (Wireless Application-Protokoll) und/oder SMS (Kurzmitteilungsdienst) zu verwenden.

8. Verfahren zur Wiedergabe von digitalem Inhalt, der gemäß einer DRM-Technologie zum Herunterladen verarbeitet wird, umfassend die folgenden Schritte:
Herunterladen eines Inhaltsobjekts (20), das einen Inhalt umfasst,
Herunterladen eines Rechteobjekts (2), das Nutzungsregeln (6) umfasst, die die Rechte zur Verwendung des Inhaltsobjekts (20) definierten; und
Wiedergeben des heruntergeladenen Inhalts gemäß den Nutzungsregeln (6);
wobei das Verfahren ferner **dadurch gekennzeichnet ist, dass**
das Inhaltsobjekt (20) von einem ersten oder einem zweiten Typ ist, wobei der Inhalt des ersten Typs des Inhaltsobjekts ein Herunterladeinhalt ist und der Inhalt des zweiten Typs des Inhaltsobjekts eine Session Initiation-Beschreibung für eine Datenstromübertragungssitzung ist;
der Schritt des Wiedergebens des heruntergeladenen Inhalts, das Einrichten einer Datenstromübertragungssitzung umfasst, während der strömende Medien übertragen werden durch Datenstromübertragung gemäß der Information in der Session Initiation-Beschreibung und gemäß den Nutzungsregeln (6), die dem empfangenen Rechteobjekt (2) zugeordnet sind, wenn das heruntergeladene Inhaltsobjekt von dem zweiten Typ ist.

9. Verfahren nach Anspruch 8, wobei die Session Initiation-Beschreibung (23) eine SDP-Beschreibung, eine URL zu den strömenden Medien oder eine SMIL-Datei umfasst.

10. Verfahren nach Anspruch 8 oder 9, wobei das Rechteobjekt (2) erste kryptographische Daten (7) in Bezug auf den kryptographischen Schutz der Session Initiation-Beschreibung enthält, der im Inhaltsobjekt des zweiten Typs (20) enthalten ist.

11. Verfahren nach Anspruch 10, wobei die ersten kryptographischen Daten kryptographisch geschützt werden.

12. Verfahren nach Anspruch 10, wobei die strömenden Medien (22) mit zweiten kryptographischen Daten (24) in der Session Initiation-Beschreibung (23) im Inhaltsobjekt des zweiten Typs kryptographisch geschützt werden.

13. Verfahren nach Anspruch 12, wobei die strömenden Medien unter Verwendung eines Sicherheitsprotokolls geschützt werden.

14. Verfahren nach Anspruch 13, wobei ein sicheres Echtzeittransportprotokoll (SRTP) als Sicherheitsprotokoll verwendet wird.

15. Verfahren nach Anspruch 8, wobei das Inhaltsobjekt des zweiten Typs mit einem Teil der strömenden Medien versehen ist und das Inhaltsobjekt des zweiten Typs derartig versehen an einen Nutzer übertragen wird, der keine Rechte oder eingeschränkte Rechte an den strömenden Medien hat.

16. Verfahren nach Anspruch 8, wobei das Inhaltsobjekt des ersten oder zweiten Typs (20) und/oder das Rechteobjekt (2) durch Verschlüsselung und/oder Integritätsschutz geschützt wird.

17. Verfahren nach einem der Ansprüche 10 bis 11, wobei die Client-Vorrichtung nach Empfang des Rechteobjekts und des Inhaltsobjekts des zweiten Typs die Rechte am Inhaltsobjekt und an den strömenden Medien auf der Grundlage der in den Rechteobjekten enthaltenen Information durchsetzt, wobei
- die Client-Vorrichtung auf die Session Initiation-Beschreibung (23), die im Inhaltsobjekt des zweiten Typs enthalten ist, unter Verwendung der ersten kryptographischen Daten (7) zugreift und eine Übertragung der strömenden Medien durch Einrichten (29) einer Verbindung zwischen dem Client und einem Datenstromübertragungsserver (32) auslöst.

18. Verfahren nach Anspruch 13, wobei der Datenstromübertragungsserver die strömenden Medien (22) unter Verwendung der zweiten kryptographischen Daten (24) kryptographisch schützt, wobei der Schritt des Wiedergebens einschließt, dass der Client:
- auf die zweiten kryptographischen Daten (24) zugreift, die im Inhaltsobjekt des zweiten Typs enthalten sind,
- auf die strömenden Medien (22) unter Verwendung der durch Zugriff erlangten zweiten kryptographischen Daten (24) zugreift und
- die durch Zugriff erlangten strömenden Medien gemäß den Nutzungsregeln wiedergibt.

19. Verfahren nach Anspruch 12, wobei die Session Initiation-Beschreibung die Form einer SDP-Beschreibung hat und die zweiten kryptographischen Daten (24) in der SDP-Beschreibung enthalten sind.

20. Verfahren nach Anspruch 12, wobei die Session Initiation-Beschreibung die Form einer SDP-Beschreibung hat und die zweiten kryptographischen Mittel (24) von der SDP-Beschreibung getrennt bereitgestellt werden.

21. Verfahren nach Anspruch 12, wobei die Session Initiation-Beschreibung die Form einer SMIL-Datei hat und die zweiten kryptographischen Daten (24) in der SMIL-Datei enthalten sind.

22. Verfahren nach Anspruch 12, wobei die Session Initiation-Beschreibung die Form einer SMIL-Datei hat und die zweiten kryptographischen Daten (24) von der SMIL-Datei getrennt bereitgestellt werden.

23. Verfahren nach Anspruch 12, wobei mehrere zweite kryptographische Datenelemente (24) zum Schutz der strömenden Medien verwendet werden.

24. Verfahren nach Anspruch 12, wobei die Session Initiation-Beschreibung (23) Information über Verwaltung der zweiten kryptographischen Daten (24) aufweist, wobei die Information kryptographischen Schutz der strömenden Medien und/oder Prüfung der Datenintegrität der strömenden Medien (22) mit einem neuen kryptographischen Schlüssel berücksichtigt, der aus den zuerst erwähnten zweiten kryptographischen Daten (24) abgeleitet wird.

25. Verfahren nach Anspruch 9, wobei die URL (Uniform Resource Locator) eines Verteilungsservers (9) in einem Metadatenteil (8) des Inhaltsobjekts enthalten ist.

26. Verfahren nach Anspruch 12, wobei die zweiten kryptographischen Daten (24) verwendet werden, um kryptographische Information abzuleiten, um für die strömenden Medien Integritätsschutz zu bieten und/oder deren Empfang zu prüfen.

27. Verfahren nach Anspruch 8, wobei das Inhaltsobjekt (20) und das Rechteobjekt (2) unter Verwendung von HTTP (Hypertext-Übertragungsprotokoll) und/oder WAP (Wireless Application-Protokoll) und/oder SMS (Kurzmitteilungsdienst) an den Client (11) geliefert werden.

28. Verfahren nach Anspruch 8, wobei das Rechteobjekt (2) und/oder das Inhaltsobjekt (20) in den ungeschützten Client heruntergeladen werden.

## Revendications

1. Dispositif client (11) destiné à produire un contenu numérique traité selon une technologie de gestion des droits numériques, DRM, en vue d'un téléchargement, lequel dispositif client (11) comporte
des moyens permettant de télécharger un objet de contenu (20) d'un premier type comprenant un contenu de téléchargement en qualité de contenu ;
des moyens permettant de télécharger un objet de droits (2) comprenant des règles d'utilisation (6) définissant le droit d'utiliser un objet de contenu associé (20) ; et
des moyens pour produire un contenu dans l'objet de contenu (20) du premier type selon les règles d'utilisation d'un objet de droits reçu connexe (2),
**caractérisé en ce que**
lesdits moyens permettant de télécharger l'objet de contenu sont en outre agencés de manière à télécharger un objet de contenu d'un second type comportant, en tant que contenu, une description d'ouverture de session (23) pour une session transmise en continu, et **en ce que**
lesdits moyens pour produire le contenu sont en outre aptes à mettre en place une session transmise en continu, au cours de laquelle un support transmis en continu est transféré par diffusion en continu, selon les informations dans la description d'ouverture de session (23) reçue dans l'objet de contenu (20) du second type et selon les règles d'utilisation (6) d'un objet de droits reçu connexe (2).

2. Dispositif client selon la revendication 1, dans lequel la description d'ouverture de session (23) comporte une description SDP, une adresse URL audit support transmis en continu ou un fichier SMIL.

3. Dispositif client selon la revendication 1 ou 2, dans lequel l'objet de droits (2) contient des premières données de chiffrement (7) connexes à la protection cryptographique de la description d'ouverture de session contenue dans l'objet de contenu du second type (20).

4. Dispositif client selon la revendication 3, dans lequel la description d'ouverture de session (23) dans l'objet de contenu du second type (20) comporte des secondes données de chiffrement (24) destinées à la protection cryptographique du support transmis en continu (22).

5. Dispositif client selon la revendication 4, dans lequel les secondes données de chiffrement comportent au moins une clé de chiffrement (24).

6. Dispositif client selon la revendication 4, dans lequel les secondes données de chiffrement comportent plusieurs clés de chiffrement (24) protégeant le support transmis en continu.

7. Dispositif client selon la revendication 1, dans lequel lesdits moyens permettant de télécharger l'objet de contenu (20) du premier ou du second type et l'objet de droits (2) sont aptes à utiliser le protocole HTTP (protocole de transfert hypertexte) et/ou le protocole WAP (protocole d'application sans fil) et/ou le service SMS (service de messages courts).

8. Procédé destiné à produire un contenu numérique traité selon une technologie de gestion des droits numériques, DRM, en vue d'un téléchargement, comprenant les étapes ci-après consistant à
télécharger un objet de contenu (20) comprenant un contenu ;
télécharger un objet de droits (2) comprenant des règles d'utilisation (6) définissant les droits d'utilisation de l'objet de contenu (20) ; et
produire le contenu téléchargé selon les règles d'utilisation (6),
dans lequel le procédé est en outre **caractérisé en ce que**
l'objet de contenu (20) est d'un premier type ou d'un second type, dans lequel le contenu du premier type d'objet de contenu est un contenu de téléchargement, et le contenu du second type d'objet de contenu est une description d'ouverture de session pour une session transmise en continu ;
et **en ce que** ladite étape consistant à produire le contenu téléchargé comporte l'étape consistant à mettre en place une session transmise en continu, au cours de laquelle un support transmis en continu est transféré par diffusion en continu, selon les informations dans la description d'ouverture de session et selon les règles d'utilisation (6) connexes à l'objet de droits reçu (2) si l'objet de contenu téléchargé est du second type.

9. Procédé selon la revendication 8, dans lequel la description d'ouverture de session (23) comporte une description SDP, une adresse URL audit support transmis en continu ou un fichier SMIL.

10. Procédé selon la revendication 8 ou 9, dans lequel l'objet de droits (2) contient des premières données de chiffrement (7) connexes à une protection cryptographique de la description d'ouverture de session contenue dans l'objet de contenu du second type (20).

11. Procédé selon la revendication 10, dans lequel les premières données de chiffrement sont protégées par chiffrement.

12. Procédé selon la revendication 10, dans lequel le support transmis en continu (22) est protégé par chiffrement avec des secondes données de chiffrement (24) dans la description d'ouverture de session (23) de l'objet de contenu du second type.

13. Procédé selon la revendication 12, dans lequel le support transmis en continu est protégé au moyen d'un protocole de sécurité.

14. Procédé selon la revendication 13, dans lequel un protocole de transport en temps réel sécurisé (SRTP) est utilisé en qualité de protocole de sécurité.

15. Procédé selon la revendication 8, dans lequel l'objet de contenu du second type reçoit une partie de support transmis en continu, et l'objet de contenu du second type est transmis de cette manière à un utilisateur qui ne bénéficie pas de droits ou présente des droits limités d'accès au support transmis en continu.

16. Procédé selon la revendication 8, dans lequel l'objet de contenu du premier ou second type (20) et/ou l'objet de droits (2) est/sont protégé(s) par cryptage et/ou protection d'intégrité.

17. Procédé selon l'une quelconque des revendications 10 à 11, dans lequel le dispositif client, suite à la réception de l'objet de droits et de l'objet de contenu du second type, met en application les droits d'accès à l'objet de contenu et au support transmis en continu sur la base des informations contenues dans l'objet de droits, dans lequel
- le dispositif client accède à la description d'ouverture de session (23) contenue dans l'objet de contenu du second type en faisant appel aux premières données de chiffrement (7) et initie la transmission du support transmis en continu par la mise en place (29) d'une connexion entre le client et un serveur de diffusion en continu (32).

18. Procédé selon la revendication 13, dans lequel le serveur de diffusion en continu protège par chiffrement le support transmis en continu (22) en faisant appel aux secondes données de chiffrement (24), dans lequel l'étape de production inclut les étapes ci-après dans lesquelles le client :
- accède aux secondes données de chiffrement (24) contenues dans l'objet de contenu du second type ;
- accède au support transmis en continu (22) en faisant appel aux secondes données de chiffrement auxquelles il a été accédé (24), et
- modifie le support transmis en continu auquel il a été accédé selon les règles d'utilisation.

19. Procédé selon la revendication 12, dans lequel la description d'ouverture de session se présente sous la forme d'une description SDP et les secondes données de chiffrement (24) sont incluses dans la description SDP.

20. Procédé selon la revendication 12, dans lequel la description d'ouverture de session se présente sous la forme d'une description SDP et les seconds moyens de chiffrement (24) sont délivrés séparément de la description SDP.

21. Procédé selon la revendication 12, dans lequel la description d'ouverture de session se présente sous la forme d'un fichier SMIL et les secondes données de chiffrement (24) sont incluses dans le fichier SMIL.

22. Procédé selon la revendication 12, dans lequel la description d'ouverture de session se présente sous la forme d'un fichier SMIL et les secondes données de chiffrement (24) sont délivrées séparément dudit fichier SMIL.

23. Procédé selon la revendication 12, dans lequel plusieurs éléments de secondes données de chiffrement (24) sont utilisés en vue de la protection du support transmis en continu.

24. Procédé selon la revendication 12, dans lequel la description d'ouverture de session (23) comporte des informations sur la gestion des secondes données de chiffrement (24), lesdites informations permettant la protection cryptographique du support transmis en continu et/ou la vérification de l'intégrité des données du support transmis en continu (22) au moyen d'une nouvelle clé de chiffrement calculée à partir desdites secondes données de chiffrement (24) mentionnées en premier lieu.

25. Procédé selon la revendication 9, dans lequel l'adresse URL (adresse universelle) d'un serveur de distribution (9) est incluse dans une partie de métadonnées (8) de l'objet de contenu.

26. Procédé selon la revendication 12, dans lequel les secondes données de chiffrement (24) sont utilisées pour dériver des informations de chiffrement afin de protéger l'intégrité et/ou de vérifier la réception du support transmis en continu.

27. Procédé selon la revendication 8, dans lequel l'objet de contenu (20) et l'objet de droits (2) sont délivrés au client (11) en utilisant un protocole HTTP (protocole de transfert hypertexte) et/ou un protocole WAP (protocole d'application sans fil) et/ou un service SMS (service de messages courts).

28. Procédé selon la revendication 8, dans lequel l'objet de droits (2) et/ou l'objet de contenu (20) est/sont téléchargé(s) vers le client sans protection.
